(19) **Europäisches Patentamt European Patent Office Office européen des brevets**

(11) **EP 4 221 297 B1**

(12) **EUROPEAN PATENT SPECIFICATION**

(45) Date of publication and mention
of the grant of the patent:
**15.07.2026 Bulletin 2026/29**

(21) Application number: **21882063.7**

(22) Date of filing: **20.10.2021**

(51) International Patent Classification (IPC):
*H04W 16/10* (2009.01)   *H04L 5/00* (2006.01)
*H04L 25/02* (2006.01)

(52) Cooperative Patent Classification (CPC):
**H04L 5/005;** H04L 5/0051; H04L 25/0224

(86) International application number:
**PCT/CN2021/125030**

(87) International publication number:
**WO 2022/083648 (28.04.2022 Gazette 2022/17)**

(54) **NONPERIODIC RS TRANSMISSION METHOD, TERMINAL, AND NETWORK-SIDE DEVICE**

NICHTPERIODISCHES RS-ÜBERTRAGUNGSVERFAHREN, ENDGERÄT UND NETZWERKSEITIGE VORRICHTUNG

PROCÉDÉ DE TRANSMISSION DE RS NON PÉRIODIQUE, TERMINAL, ET DISPOSITIF CÔTÉ RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2020 CN 202011128902**

(43) Date of publication of application:
**02.08.2023 Bulletin 2023/31**

(73) Proprietor: **Vivo Mobile Communication Co., Ltd. Dongguan, Guangdong 523863 (CN)**

(72) Inventors:
• **SHI, Yuan**
**Dongguan, Guangdong 523863 (CN)**
• **TAMRAKAR, Rakesh**
**Dongguan, Guangdong 523863 (CN)**

(74) Representative: **Murgitroyd & Company**
**165-169 Scotland Street**
**Glasgow G5 8PL (GB)**

(56) References cited:
| | |
|---|---|
| **EP-A1- 3 471 327** | **EP-A1- 3 509 241** |
| **EP-A1- 4 047 850** | **EP-A1- 4 106 248** |
| **CN-A- 108 616 345** | **CN-A- 108 616 345** |
| **CN-A- 110 324 124** | **CN-A- 110 460 416** |
| **CN-A- 110 650 001** | **CN-A- 110 650 001** |
| **CN-A- 111 245 587** | **CN-A- 111 245 587** |
| **CN-A- 113 163 488** | **US-A1- 2019 174 466** |

• HUAWEI, HISILICON: "Remaining details of SRS design", 3GPP DRAFT; R1-1719441, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20171127 - 20171201, 18 November 2017 (2017-11-18), Mobile Competence Centre ; 650, route des Lucioles ; F-06921 Sophia-Antipolis Cedex ; France , XP051369331

## Description

### TECHNICAL FIELD

This application belongs to the field of communication technologies, and specifically to an aperiodic RS transmission method, a terminal, and a network-side device.

### BACKGROUND

Before an aperiodic reference signal (Reference Signal, RS) resource is transmitted between a network-side device and a terminal, the network-side device needs to configure an aperiodic RS resource for the terminal through radio resource control (Radio Resource Control, RRC) signaling and activate the aperiodic RS resource by transmitting downlink control information (Downlink Control Information, DCI). After receiving the DCI for activation, the activated aperiodic RS resource is transmitted or received.

However, a manner of determining a slot position for a terminal to transmit or receive an aperiodic RS resource is not flexible enough in the related technology.

D1 (CN 110650001 A) discloses a transmission method and device, a first communication node, a second communication node and a medium. The method comprises the following steps: sending indication information, wherein the indication information is used for indicating a second communication node to send an uplink signal or indicating the second communication node to receive a downlink signal; and performing signal transmission with the second communication node according to the indication information.

D2 (CN 111245587 A) discloses an aperiodic SRS sending method and related equipment. The method comprises the steps that a first terminal device receives a first control instruction, wherein the first control instruction is used for triggering the first terminal device to send an aperiodic SRS, the first control instruction comprises a first parameter domain and SRS resource set information, and the first parameter domain comprises a first time slot offset; and the first terminal device determines a time domain position for sending an aperiodic SRS according to the first time slot offset, and sends the aperiodic SRS according to the determined time domain position. According to the invention, the flexibility and diversity of the sending time slot determination mode of the aperiodic SRS can be improved.

D3 (CN 108616345 A) discloses a method and apparatus for configuring a reference signal. Before sending a reference signal by using a non-cycle way, a network device sends configuration information to a terminal device, wherein the configuration information is used for indicating a time slot offset of one or more reference signal resource sets. Therefore, the network device sends reference signals flexibly based on different time slots; the number of times of triggering the reference signal and reporting the measurement result is reduced; and the efficiency of the communication system is improved.

D4 (EP 3471327 A1) discloses a sounding method of user equipment (UE) in a wireless communication system, comprises the steps of: receiving configuration of one or more sounding reference signal (SRS) resource sets from a base station; receiving, from the base station, activation command information commanding the SRS transmission activation of a particular SRS resource set from among the one or more SRS resource sets; and transmitting, to the base station, the SRS corresponding to the particular SRS resource set, wherein the reference signal, for which a spatial relationship is assumed for each SRS resource included in the particular SRS resource set, can be determined on the basis of the activation command information.

### SUMMARY

Embodiments of this application provide an aperiodic RS transmission method, a terminal, and a network-side device, to resolve the problem that a manner of determining a slot position for a terminal to transmit or receive an aperiodic RS resource is not flexible enough in the related technology.

According to a first aspect, an aperiodic RS transmission method is provided, which is defined in claim 1.

Further advantageous embodiments of the present disclosure are indicated in the dependent claims.

It is to be understood that both the forgoing general description and the following detailed description are exemplary only, and are not restrictive of the present disclosure.

BRIEF DESCRIPTION OF THE DRAWINGS

FIG. 1 is a schematic diagram of an architecture of a communication system according to an embodiment of this application;

FIG. 2(a) is a flowchart of an aperiodic RS transmission method according to an embodiment of this application;
FIG. 2(b) is a flowchart of an aperiodic RS transmission method according to an embodiment of this application;
FIG. 3 is a schematic diagram of a structure of a terminal according to an embodiment of this application;
FIG. 4 is a schematic diagram of hardware of a communication device according to an embodiment of this application;
FIG. 5 is a schematic diagram of hardware of a terminal according to an embodiment of this application;
FIG. 6 is a schematic diagram of a structure of a network-side device according to an embodiment of this application; and
FIG. 7 is a schematic diagram of hardware of a network-side device according to an embodiment of this application.

DETAILED DESCRIPTION

The following clearly describes the technical solutions in embodiments of this application with reference to the accompanying drawings in embodiments of this application. Apparently, the described embodiments are some of embodiments of this application rather than all of the embodiments. All other embodiments obtained by a person of ordinary skill in the art based on embodiments of this application without creative efforts shall fall within the protection scope of this application.

The specification and claims of this application, and terms "first" and "second" are used to distinguish similar objects, but are unnecessarily used to describe a specific sequence or order. It may be understood that the data used in such a way is interchangeable in proper circumstances, so that embodiments of this application can be implemented in other sequences than the sequence illustrated or described herein. Objects distinguished by "first" and "second" are usually of one type, and a quantity of the objects is not limited. For example, one or more first objects may be provided. In addition, "and/or" in the specification and claims indicates at least one of the connected objects, and the character "/" generally indicates an "or" relationship between the associated objects.

It needs to be noted that the technology described in embodiments of this application is not limited to a Long Term Evolution (Long Term Evolution, LTE)/LTE-Advanced (LTE-Advanced, LTE-A) system, and may be used in another wireless communication system such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), and Single-carrier Frequency-Division Multiple Access (Single-carrier Frequency-Division Multiple Access, SC-FDMA), and another system. The terms "system" and "network" are often used interchangeably in embodiments of this application, and the technology described may be used for both the systems and radio technologies mentioned above as well as for other systems and radio technologies. The following descriptions describe New Radio (New Radio, NR) systems for exemplary purposes and use the term NR for most of the following descriptions. However, these technologies may also be applied to applications other than NR system applications, for example, 6th Generation (6th Generation, 6G) communication systems.

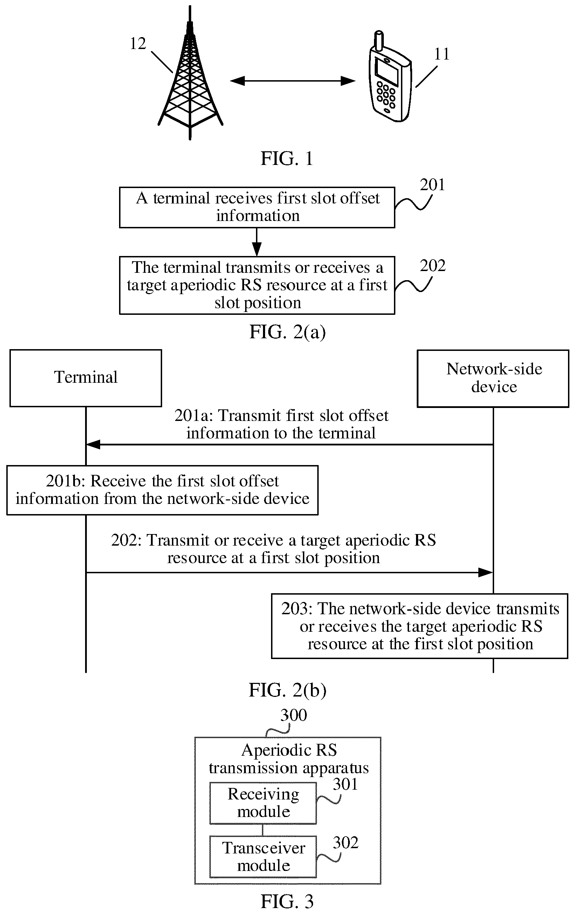

FIG. 1 is a block diagram of a wireless communication system to which an embodiment of this application is applicable. The wireless communication system includes a terminal 11 and a network-side device 12. The terminal 11 may also be referred to as a terminal device or user terminal (User Equipment, UE). The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or an in-vehicle device (VUE), a pedestrian UE (PUE), among other terminal-side devices. The wearable device includes a wristband, headphones, glasses, and the like. It should be noted that the specific type of the terminal 11 is not limited in embodiments of this application. The network-side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved B node (eNB), a home B node, a home evolved B node, a WLAN access point, a Wi-Fi node, a transmitting receiving point (Transmitting Receiving Point, TRP) or some other appropriate terms in the field, provided that the same technical effect is achieved. The base station is not limited to a specific technical vocabulary. It needs to be noted that a base station in an NR system is only used as an example in embodiments of this application. However, the specific type of the base station is not limited.

In embodiments of this application, a terminal receives first slot offset information, where the first slot offset information is used for indicating a first slot offset of a target aperiodic RS resource; and transmits or receives the target aperiodic RS resource at a first slot position, where the first slot position is determined by any of the following: the first slot offset, and the first slot offset and a second slot offset; and the second slot offset is a slot offset configured for the target aperiodic RS resource. In the solution, the solution of determining a first slot position through a first slot offset or determining a first slot position through a first slot offset and a second slot offset increases the selectability and flexibility of determining a slot position for the terminal to transmit or receive an aperiodic RS resource, so that the problem that a manner of determining a slot position for the terminal to transmit or receive an aperiodic RS resource is not flexible enough in the related technology can be solved. In addition, the solution increases the selectability and flexibility of delivering a slot position of DCI for activating the aperiodic RS resource, that is, increases the selectability and flexibility of a slot position for transmitting a PDCCH, and can resolve to a certain extent the problem of congestion of PDCCH resources caused by delivery of a plurality of pieces of DCI in the same slot in the related technology.

An aperiodic RS transmission method, a terminal, and a network-side device provided in embodiments of this application are described in detail below by means of some embodiments and their application scenarios in conjunction with the accompanying drawings.

Based on a communication system shown in FIG. 1, embodiments of this application provide an aperiodic RS transmission method. As shown in FIG. 2(a), the aperiodic RS transmission method includes the following step 201 to step 203.

Step 201: A terminal receives first slot offset information.

The first slot offset information is used for indicating a first slot offset of a target aperiodic RS resource.

Step 202: The terminal transmits or receives the target aperiodic RS resource at a first slot position.

The first slot position is determined by any of the following: the first slot offset, and the first slot offset and a second slot offset; and the second slot offset is a slot offset configured for the target aperiodic RS resource.

Optionally, correspondingly, the network-side device transmits first slot offset information. As shown in FIG. 2(b), in embodiments of this application, before step 201, the aperiodic RS transmission method provided in embodiments of this application may further include step 201a. The foregoing step 201 is specifically implemented by using the following step 201b.

Step 201a: The network-side device transmits first slot offset information to the terminal

Step 201b: The terminal receives the first slot offset information from the network-side device.

Optionally, as shown in FIG. 2(b), in embodiments of this application, the aperiodic RS transmission method provided in embodiments of this application further includes the following step 203.

Step 203: The network-side device receives the target aperiodic RS resource at the first slot position.

For example, the target aperiodic RS resource includes an aperiodic uplink RS, for example, an SRS. In step 202, the terminal transmits the aperiodic uplink RS at the first slot position. Correspondingly, in step 203, the network-side device receives the aperiodic uplink RS at the first slot position. Alternatively, the target aperiodic RS resource includes an aperiodic downlink RS, for example, a CSI-RS or a position reference signal (Position Reference Signal, PRS). In step 202, the terminal receives the aperiodic downlink RS at the first slot position. Correspondingly, in step 203, the network-side device transmits the aperiodic downlink RS at the first slot position.

In embodiments of this application, in a case that the first slot position is determined by the first slot offset, a transmission or reception slot position of an aperiodic RS resource can be effectively determined, so that a manner of determining the transmission or reception slot position of the aperiodic RS resource is more flexible.

In embodiments of this application, in a case that the first slot position is determined by the first slot offset and the second slot offset, compared with the solution that the first slot position is determined by the second slot offset in the related technology, a manner of determining the transmission or reception slot position of the aperiodic RS resource is more flexible, so that aperiodic RS resource can be better transmitted or received. In addition, a manner of determining and delivering a slot position of DCI for activating the aperiodic RS resource is also more flexible, that is, a manner of determining a slot position for transmitting a PDCCH is more flexible. In this way, the problem of congestion of PDCCH resources caused by delivery of a plurality of pieces of DCI in the same slot in the related technology can be resolved to a certain extent.

Optionally, the target aperiodic RS resource includes at least one of the following: a target aperiodic SRS resource and a target aperiodic CSI-RS resource.

It should be noted that, in embodiments of this application, the target aperiodic RS resource may be an aperiodic RS resource of another type, and may be specifically determined according to an actual case. This is not limited in embodiments of this application.

Optionally, in a case that the target aperiodic RS resource includes the target aperiodic SRS resource, the target aperiodic SRS resource is at least one aperiodic SRS resource in an aperiodic SRS resource set. It may be understood that the target aperiodic SRS resource is: one aperiodic SRS resource, two aperiodic SRS resources, a plurality of aperiodic SRS resources or all aperiodic SRS resources in the aperiodic SRS resource set. This is not limited in embodiments of this application.

Optionally, in a case that the target aperiodic RS resource includes the target aperiodic SRS resource, the target aperiodic SRS resource is at least one enabled aperiodic SRS resource (of all aperiodic SRS resources) in an aperiodic SRS resource set.

For example, the foregoing step 202 and step 203 is specifically implemented by using the following step 202a and step 203a.

Step 202a: The terminal transmits the target aperiodic SRS resource to the network-side device at the first slot position.

Step 203a: The network-side device receives the target aperiodic SRS resource from the terminal at the first slot position.

Optionally, in embodiments of this application, in a case that target information is RRC signaling, if the network-side device configures the first slot offset information in an aperiodic SRS set, all aperiodic SRS resources in the aperiodic SRS set share one piece of first slot offset information. If the network-side device configures the first slot offset information in an aperiodic SRS resource, one piece of first slot offset information is separately configured for each aperiodic SRS resource in the aperiodic SRS set. If the network-side device configures a plurality of pieces of first slot offset information in an aperiodic SRS set and each piece of first slot offset information corresponds to at least one aperiodic SRS resource, one piece of first slot offset information is configured for at least one aperiodic SRS resource in the aperiodic SRS set.

Optionally, in a case that the target aperiodic RS resource includes the target aperiodic CSI-RS resource, the target aperiodic CSI-RS resource is: at least one aperiodic CSI-RS resource associated with an aperiodic CSI report. It may be understood that the target aperiodic CSI-RS resource is: one aperiodic CSI-RS resource, two aperiodic CSI-RS resources, a plurality of aperiodic CSI-RS resources or all aperiodic CSI-RS resources associated with the aperiodic CSI report.

Optionally, in a case that the target aperiodic RS resource includes the target aperiodic CSI-RS resource, the target aperiodic CSI-RS resource is: at least one piece of enabled aperiodic CSI-RS resource (of all aperiodic CSI-RS resources) associated with an aperiodic CSI report.

For example, the foregoing step 202 and step 203 may specifically be implemented by using the following step 202b and step 203b.

Step 202b: The network-side device transmits the target aperiodic CSI-RS resource to the terminal at the first slot position.

Step 203b: The terminal receives the target aperiodic CSI-RS resource from the network-side device at the first slot position.

Optionally, in embodiments of this application, in a case that target information is RRC signaling, if the network-side device configures the first slot offset information in an aperiodic CSI report, all aperiodic CSI-RS resources associated with the aperiodic CSI report share one piece of first slot offset information. If the network-side device configures the first slot offset information in an aperiodic CSI resource, one piece of first slot offset information is separately configured for each CSI-RS resource associated with the aperiodic CSI report. If the network-side device configures a plurality of pieces of first slot offset information in an aperiodic CSI resource and each piece of first slot offset information corresponds to at least one aperiodic SRS resource associated with the aperiodic CSI report, one piece of first slot offset information is configured for at least one aperiodic SRS resource associated with the aperiodic CSI report.

Optionally, the foregoing step 201 is specifically implemented by using the following step 201c.

Step 201c: The terminal receives the target information.

The target information includes a slot offset indication field, and the slot offset indication field carries the first slot offset information; and the target information is at least one of the following: RRC signaling, DCI, and first media access control control element (Media Access Control Control Element, MAC CE) signaling. The target information may be other signaling. This is not limited in embodiments of this application.

Correspondingly, the network-side device transmits the target information.

Optionally, the foregoing step 201a and step 201b may specifically be implemented by using the following step 201d and step 201e.

Step 202d: The terminal receives the target information from the network-side device.

Step 201e: The network-side device transmits the target information to the terminal.

Optionally, in embodiments of this application, the first slot offset information may be separately indicated by using one type of signaling, or the first slot offset information may be jointly indicated by using a plurality of types of signaling.

For example, in a case that the target information is the DCI or the first MAC CE signaling, the first slot offset information is one piece of slot offset information in a slot offset information set, and the slot offset information set is configured for the terminal through the RRC signaling or second MAC CE signaling.

It should be noted that, the foregoing first MAC CE signaling and second MAC CE signaling may be the same signaling or may be different signaling.

Optionally, in a case that the slot offset information set is configured for the terminal through the second MAC CE signaling, the network-side device may update the slot offset information set through MAC CE signaling.

Optionally, in a case that the slot offset information set is empty, the slot offset indication field has 0 bits.

Optionally, before the foregoing step 202, the aperiodic RS transmission method provided in embodiments of this application may further include the following step 204 and step 205.

Step 204: The network-side device transmits target request information to the terminal

Step 205: The terminal receives the target request information from the network-side device

The target request information includes a target activation indication field, and the target activation indication field is used for indicating whether to activate the target aperiodic RS resource. In a case that the target activation indication field does not exist or the target activation indication field indicates not to activate the target aperiodic RS resource, the slot offset indication field has 0 bits

Optionally, in embodiments of this application, the foregoing target information and target request information may be the same signaling or may be different signaling. This is not limited in embodiments of this application.

For example, in a case that the target information is RRC signaling or MAC CE signaling, the target request information is DCI. When the target information is DCI, the target request information is also DCI. In this case, the target information and the target request information are two pieces of information carried in the same piece of DCI.

It may be understood that in a case that the target activation indication field does not exist (that is, the target activation indication field has 0 bits) or the target activation indication field indicates not to activate the target aperiodic RS resource (the value is 0 (that is, '0' or '00')), the slot offset indication field has 0 bits.

For example, the target activation indication field that is in DCI and that is used for indicating whether to activate an aperiodic SRS resource is an SRS request field, in a case that the SRS request field has 0 bits or has a value of 0 (that is, '0' or '00'), the slot offset indication field has 0 bits.

For example, the target activation indication field that is in DCI and that is used for indicating whether to activate an aperiodic CSI-RS resource is a CSI request field, in a case that the CSI request field has 0 bits or has a value of 0 (that is, '0' or '00'), the slot offset indication field has 0 bits.

It should be noted that, in embodiments of this application, in a case that the SRS request has two bits or three bits, and in a case that a cell in which the terminal is located does not support a SUL, the SRS request has two bits. When a cell in which the terminal is located supports a SUL, the SRS request has three bits. The size of the CSI request is determined based on a higher layer parameter (reportTriggerSize). The CSI request may have m bits, where m is a natural number. For example, m is 0, 1, 2, 3, 4, 5, 6 or another value.

In embodiments of this application, the flexibility of setting a slot offset indication field is increased.

Optionally, the target aperiodic RS resource is the target aperiodic SRS resource, the target request information is first request information, and the target activation indication field is a first activation indication field. When the first activation indication field indicates to activate the target aperiodic SRS resource, the first slot offset information is used for indicating a first slot offset of the target aperiodic SRS resource.

For example, the foregoing step 204 and step 205 may specifically be implemented by using the following of step 204a and step 205a.

Step 204a: The network-side device transmits the first request information to the terminal.

Step 205a: The terminal receives the first request information from the network-side device.

The first request information includes a first activation indication field, and the first activation indication field is used for indicating whether to activate the target aperiodic SRS resource. When the first activation indication field indicates to activate the target aperiodic SRS resource, the first slot offset information is used for indicating a first slot offset of the target aperiodic SRS resource; and the target aperiodic RS resource is the target aperiodic SRS resource.

Optionally, the target aperiodic RS resource is the target aperiodic CSI-RS resource, the target request information is second request information, and the target activation indication field is a second activation indication field. When the second activation indication field indicates to activate the target aperiodic CSI-RS resource, the first slot offset information is used for indicating a first slot offset of the target aperiodic CSI-RS resource.

For example, the foregoing step 204 and step 205 may specifically be implemented by using the following step 204b and step 205b.

Step 204b: The network-side device transmits the second request information to the terminal.

Step 205b: The terminal receives the second request information from the network-side device.

The second request information includes a second activation indication field, and the second activation indication field is used for indicating whether to activate the target aperiodic CSI-RS resource. When the second activation indication field indicates to activate the target aperiodic CSI-RS resource, the first slot offset information is used for indicating a first slot offset of the target aperiodic CSI-RS resource; and the target aperiodic RS resource is the target aperiodic CSI-RS resource.

In embodiments of this application, in a case that it is set that the SRS request field indicates to activate an SRS resource, the first slot offset information is used for indicating the first slot offset of the target aperiodic SRS resource. When the CSI request field indicates to activate a CSI-RS resource, the first slot offset information is used for indicating the first slot offset of the target aperiodic CSI-RS resource, so that the flexibility and versatility of indicating the first slot offset information can be increased.

Optionally, in embodiments of this application, the slot offset indication field may be one indication field, or may be two indication fields, or may be another feasible case. This is not limited in embodiments of this application.

For example, the slot offset indication field includes at least one of the following: a first indication field and a second indication field.

The first indication field is used for carrying first offset information, and the first offset information is used for indicating a first slot offset of an aperiodic SRS resource; and the second indication field is used for carrying second offset information, and the second offset information is used for indicating a first slot offset of an aperiodic CSI-RS.

It should be noted that for description of the foregoing first indication field and second indication field, refer to the foregoing related description of indicating a slot offset. Details are not described herein again. For description of the foregoing first offset information and second offset information, refer to the foregoing related description of the first slot offset information. Details are not described herein again.

It may be understood that in a case that the slot offset indication field is one indication field, there are three cases as follows:

In a first case, the slot offset indication field is only used for an aperiodic SRS resource. In this case, the slot offset indication field is the first indication field, and the first offset information (that is, the first slot offset information) is used for indicating the first slot offset of the aperiodic SRS resource.

In a second case, the slot offset indication field is only used for an aperiodic CSI-RS resource. In this case, the slot offset indication field is the second indication field, and the second offset information (that is, the first slot offset information) is used for indicating the first slot offset of the aperiodic CSI-RS resource.

In a third case, the slot offset indication field is used for an aperiodic SRS resource and an aperiodic CSI-RS resource (the aperiodic SRS resource and the aperiodic CSI-RS resource share one indication field). In this case, the slot offset indication field is the first indication field and the second indication field, the first indication field and the second indication field are the same indication field, and the first offset information and the second offset information are the same piece of offset information (that is, the first slot offset information). Further, the first slot offset information may be for indicating the first slot offset of the aperiodic SRS resource and may also be for indicating the first slot offset of the aperiodic CSI-RS resource.

It may be understood that the foregoing third case may specifically include three cases as follows:

1. The first slot offset information simultaneously indicates the first slot offset of the aperiodic SRS resource and the first slot offset of the aperiodic CSI-RS resource.
2. When the SRS request field is not 0 (that is, the SRS request field indicates to activate an aperiodic SRS resource), the first slot offset information indicates the first slot offset of the aperiodic SRS resource.
3. When the CSI request field is not 0 (that is, the CSI request field indicates to activate an aperiodic CSI-RS resource), the first slot offset information indicates the first slot offset of the aperiodic CSI-RS.

It may be understood that in a case that the slot offset indication field is two indication fields, one indication field is used for an aperiodic SRS resource (that is, the first indication field is used for an aperiodic SRS resource), and the other indication field is used for an aperiodic CSI-RS resource (that is, the first indication field is used for an aperiodic CSI-RS resource).

In embodiments of this application, a plurality of possible existence forms the slot offset indication field are added, so that the problem of PDCCH congestion can be better resolved.

Optionally, the first slot offset information includes offsetting N target slots, any target slot is any one of the following: an uplink slot, a downlink slot, a special slot, a valid slot, an enable slot, and a random slot, and N is a natural number.

It should be noted that, in embodiments of this application, a sequential order of offsetting based on the first offset information and offsetting based on the second slot offset is not limited. For example, a communication device (after receiving DCI for activating the target aperiodic RS resource) may first perform offsetting based on the second slot offset and then perform offsetting based on the first offset information to determine the first slot position; or may first perform offsetting based on the first offset information and then perform offsetting based on the second slot offset to determine the first slot position.

It may be understood that, in embodiments of this application, the offsetting N target slots is offsetting to an $N^{th}$ target slot.

Optionally, in a case that the first slot position is determined through the first slot offset, the target slot is an uplink slot, a downlink slot, a special slot, a valid slot, or an enable slot. That is, the first slot offset information includes offsetting N uplink slots, N downlink slots, N special slots, N enable slots or N valid slots.

In embodiments of this application, in a case that the first slot position is determined through the first slot offset, the first slot offset information is offsetting N target slots, and compared with the solution that the first slot position is determined by the second slot offset in the related technology, a manner of determining the transmission or reception slot position of the aperiodic RS resource is more flexible, so that aperiodic RS resource can be better transmitted or received. In addition, a manner of determining and delivering a slot position of DCI for activating the aperiodic RS resource is also more flexible, that is, a manner of determining a slot position for transmitting a PDCCH is more flexible. In this way, the problem of congestion of PDCCH resources caused by delivery of a plurality of pieces of DCI in the same slot in the related technology can be resolved to a certain extent.

Optionally, in a case that the first slot offset information is not configured, N is a default value. The default value may be a preset random value, and may be specifically determined according to an actual use requirement. This is not limited in embodiments of this application.

For example, in a case that the slot offset indication field associated with an aperiodic SRS or an aperiodic CSI-RS is not configured (that is, the first slot offset information is not configured), N is 0 or 1, that is, the first slot offset information is offsetting zero target slots or offsetting one target slot, that is, offset to the zeroth target slot or offset to the first target slot.

For example, in a case that the target information is DCI, if the slot offset indication field has one bit (that is, the value of the slot offset indication field is '0' or '1'), the first slot offset information may be offset to the first target slot or offset to the second target slot, or the first slot offset information may be offset to the zeroth target slot or offset to the first target slot.

For example, in a case that the target information is DCI, if the slot offset indication field has two bits (that is, the value of the slot offset indication field is '00', '01', '10', or '11'), the first slot offset information may be offset to the first target slot, offset to the second target slot, offset to the third target slot, or offset to the fourth target slot, or the first slot offset information may be offset to the zeroth target slot, offset to the first target slot, offset to the second target slot, or offset to the third target slot.

For example, in a case that the target aperiodic RS resource is an aperiodic SRS resource, the target slot may include an uplink slot and a special slot usable for uplink transmission. When the target aperiodic RS resource is an aperiodic CSI-RS resource, the target slot may include a downlink slot and a special slot usable for downlink transmission.

In embodiments of this application, the random slot refers to a random time unit on a slot resource, and the offsetting N random slots refers to offsetting N consecutive slots.

In embodiments of this application, for the description of the foregoing uplink slot, downlink slot, special slot, valid slot, and enable slot, refer to the description in the related technology. Details are not described herein again.

Optionally, the valid slot is a slot resource usable for transmitting the target aperiodic RS resource. It may be understood that the valid slot is a slot resource usable for transmitting all symbol resources in the target aperiodic RS resource.

For example, in a case that the target aperiodic RS resource is the target aperiodic SRS resource, the valid slot is a slot resource usable for transmitting all symbol resources in the target aperiodic SRS resource. The target aperiodic SRS resource is at least one aperiodic SRS resource in the aperiodic SRS resource set.

For example, in a case that the target aperiodic RS resource is the target aperiodic CSI-RS resource, the valid slot is a slot resource usable for transmitting all symbol resources in the target aperiodic CSI-RS resource. The target aperiodic CSI-RS resource is at least one aperiodic CSI-RS resource associated with the aperiodic CSI report.

Further, the valid slot is a slot resource that is in a valid window and that is usable for transmitting the target aperiodic RS resource. For description of the valid window, refer to the following description of the valid window. Details are not described herein again.

Optionally, the first slot position satisfies at least one of the following: that the first slot position is located in a valid window; that a time interval between the first slot position and second slot position is longer than or equal to a first time interval; and that a time interval between aperiodic RS resources in the target aperiodic RS resource is longer than or equal to a minimum time interval of antenna switching, where the second slot position is a slot position at which DCI for activating the target aperiodic RS resource is received, and the first time interval is a minimum time interval between DCI for activating an aperiodic RS resource and the aperiodic RS resource.

It may be understood that in a case that the first slot position is located in the valid window, the first slot position may be a random slot in the valid window, or the first slot position may be an enable slot in the valid window.

Optionally, the valid window is determined by at least one of the following: configured by the network-side device, specified in a protocol, and reported by the terminal. It may be understood that the valid window is determined by at least one of: configured by the network-side device, specified in a protocol, and reported by the terminal, or the valid window is jointly determined by a plurality of the following: configured by the network-side device, specified in a protocol, and reported by the terminal. This may be specifically determined according to an actual use requirement.

Optionally, a slot template of the valid window is determined by at least one of the following: configured by the network-side device, specified in a protocol, and reported by the terminal. It may be understood that the slot template of the valid window is determined by at least one of: configured by the network-side device, specified in a protocol, and reported by the terminal, or the slot template of the valid window is jointly determined by a plurality of the following: configured by the network-side device, specified in a protocol, and reported by the terminal. This may be specifically determined according to an actual use requirement.

Optionally, the slot template includes a starting point of the valid window, a window length of the valid window, and a distribution of slots in the valid window. The distribution of slots in the valid window refers to a distribution of uplink slots, downlink slots, special slots, valid slots, enable slots, and the like in the valid window.

Optionally, the slot template includes a starting point of the valid window, a window length of the valid window, and a position distribution of enable slots in the valid window.

It may be understood that the valid window may be consecutive slot windows, that is, the enable slots in the valid window are consecutive. The valid window may be nonconsecutive slot windows, that is, the enable slots in the valid window are not consecutive.

Optionally, in a case that the first slot position is an enable slot in the valid window, the terminal (or the network-side device) transmits or receives the target aperiodic RS resource at the first slot position. When the first slot position is a slot position other than four enable slots, the terminal (or the network-side device) may not transmit or receive the target aperiodic RS resource.

For example, the starting point of the valid window may be specified in a protocol. The window length of the valid window may be determined by any of the following: configured by the network-side device, specified in a protocol, reported by the terminal. The position distribution of the enable slots in the valid window is configured by the network-side device.

Optionally, the starting point of the valid window is located in the second slot position or a third slot position. The third slot position is a slot position determined after the second slot position is offset by the second slot offset. The starting point of the valid window may be located at another slot position. This is not limited in embodiments of this application.

Optionally, the window length of the valid window may be infinitely long, that is, it is equivalent to that there is no valid window.

For example, the slot template is 1000100101. The window length of the valid window is 10 slots (slot), and may be configured by a network or reported by the terminal by using an indication method such as a bitmap. Slots whose positions are indicated by 1 are the position distribution of the enable slots in the valid window. When the enable slots in the valid window are target slots, the first slot offset information being offset to the first enable slot in the valid window refers to offsetting to a slot position indicated by the first 1. Similarly, the first slot offset information being offset to the second enable slot in the valid window refers to being offset to a slot position indicated by the second 1.

For example, the slot template may be determined based on whether the activated target aperiodic RS resource is an uplink resource or a downlink resource. If the activated target aperiodic RS resource is an uplink resource, the slot template may include only a slot resource usable for uplink transmission, and/or, if the activated target aperiodic RS resource includes an uplink resource, the slot template may include only a slot resource usable for downlink transmission.

Optionally, in a case that the first slot position is determined through the first slot offset and the second slot offset, if the DCI for activating the target aperiodic RS resource is received in the slot n, the target aperiodic RS resource is transmitted in a slot m, where a calculation formula is as follows:

When ca-slotoffset is configured for a target aperiodic RS resource in an activated cell,

$$m = \left( n \cdot \frac{2^{\mu_{RS}}}{2^{\mu_{PDCCH}}} \right) + t + \left[ \left( \frac{N^{CA}_{slot,offset,PDCCH}}{2^{\mu_{offset,PDCCH}}} - \frac{N^{CA}_{slot,offset,RS}}{2^{\mu_{offset,RS}}} \right) \cdot 2^{\mu_{RS}} \right] + f(t_s).$$

In other cases, $m = \left( n \cdot \frac{2^{\mu_{RS}}}{2^{\mu_{PDCCH}}} \right) + t + f(t_s)$.

$t$ represents a slot offset (the second slot offset) of the target aperiodic RS resource configured by RRC, $f(t)$ represents the first slot offset indicated by the first slot offset information, and the foregoing formula is further related to a subcarrier spacing (Subcarrier Spacing, SCS) of a PDCCH carrying DCI, and an SCS of the target aperiodic RS resource.

For example, in a case that the target aperiodic RS resource is the target aperiodic SRS resource, the foregoing calculation formula is as follows:

When ca-slotoffset is configured for a target aperiodic SRS resource in an activated cell,

$$m = \left( n \cdot \frac{2^{\mu_{SRS}}}{2^{\mu_{PDCCH}}} \right) + t + \left[ \left( \frac{N^{CA}_{slot,offset,PDCCH}}{2^{\mu_{offset,PDCCH}}} - \frac{N^{CA}_{slot,offset,SRS}}{2^{\mu_{offset,SRS}}} \right) \cdot 2^{\mu_{SRS}} \right] + f(t_s).$$

In other cases, $m = \left( n \cdot \frac{2^{\mu_{SRS}}}{2^{\mu_{PDCCH}}} \right) + t + f(t_s)$.

$t$ represents a slot offset (the second slot offset) of the target aperiodic SRS resource configured by RRC, and $f(t)$ represents the first slot offset of the target aperiodic SRS resource indicated by the first slot offset information.

For example, in a case that the target aperiodic RS resource is the target aperiodic CSI-RS resource, the foregoing calculation formula is as follows:

When ca-slotoffset is configured for an aperiodic CSI-RS resource in an activated cell,

$$m = \left( n \cdot \frac{2^{\mu_{CSIRS}}}{2^{\mu_{PDCCH}}} \right) + t + \left[ \left( \frac{N^{CA}_{slot,offset,PDCCH}}{2^{\mu_{offset,PDCCH}}} - \frac{N^{CA}_{slot,offset,CSIRS}}{2^{\mu_{offset,CSIRS}}} \right) \cdot 2^{\mu_{CSIRS}} \right] + f(t_s).$$

In other cases, $m = \left( n \cdot \frac{2^{\mu_{CSIRS}}}{2^{\mu_{PDCCH}}} \right) + t + f(t_s)$.

$t$ represents a slot offset (the second slot offset) of the target aperiodic CSI-RS resource configured by RRC, and $f(t)$ represents the first slot offset of the target aperiodic CSI-RS resource indicated by the first slot offset information.

For example, the DCI or the RRC signaling is separately indicated. For example, the first slot offset information is added to the DCI or the RRC signaling. The aperiodic SRS resource set (resource set) includes one aperiodic SRS resource. The second slot offset configured by the RRC for the aperiodic SRS resource set is offsetting three slots. The DCI is transmitted in the slot n.

When the first slot offset information in the DCI or the RRC is offsetting one valid slot, the aperiodic SRS resource is transmitted in a slot n+4, as shown in Table 1.

Table 1

| D | D | U | D | U | D | U | D | U | D | D |
|---|---|---|---|---|---|---|---|---|---|---|
| slot n | slot n+1 | slot n+2 | slot n+3 | slot n+4 | slot n+5 | slot n+6 | slot n+7 | slot n+8 | slot n+9 | slot n+10 |
| PDCCH | | | | SRS | | | | | | |

When the first slot offset information in the DCI or the RRC is offsetting one valid slot, aperiodic SRS resource is transmitted in a slot n+6, as shown in Table 2.

Table 2

| D | D | U | D | U | D | U | D | U | D | D |
|---|---|---|---|---|---|---|---|---|---|---|
| slot n | slot n+1 | slot n+2 | slot n+3 | slot n+4 | slot n+5 | slot n+6 | slot n+7 | slot n+8 | slot n+9 | slot n+10 |
| PDCCH | | | | | | SRS | | | | |

For example, a plurality of pieces of signaling are jointly indicated. For example, the slot offset information set is configured in RRC. The DCI indicates that the first slot offset information is one piece of information in the slot offset information set. The aperiodic SRS resource set includes one aperiodic SRS resource. The second slot offset configured by the RRC for the aperiodic SRS resource set is offsetting three slots. The DCI is transmitted in the slot n. The slot offset information set configured in the RRC is {1, 2, 3, 6}, which respectively represent offsetting one valid slot, offsetting two valid slots, offsetting three valid slots, and offsetting six valid slots.

When the DCI indicates that the first slot offset information is the first value in the slot offset information set, the aperiodic SRS resource is transmitted in the slot n+4, as shown in Table 3.

Table 3

| D | D | U | D | U | D | U | D | U | D | D |
|---|---|---|---|---|---|---|---|---|---|---|
| slot n | slot n+1 | slot n+2 | slot n+3 | slot n+4 | slot n+5 | slot n+6 | slot n+7 | slot n+8 | slot n+9 | slot n+10 |
| PDCCH | | | | SRS | | | | | | |

When the DCI indicates that the first slot offset information is the second value in the slot offset information set, the aperiodic SRS resource is transmitted in the slot n+6, as shown in Table 4.

Table 4

| D | D | U | D | U | D | U | D | U | D | D |
|---|---|---|---|---|---|---|---|---|---|---|
| slot n | slot n+1 | slot n+2 | slot n+3 | slot n+4 | slot n+5 | slot n+6 | slot n+7 | slot n+8 | slot n+9 | slot n+10 |
| PDCCH | | | | | | SRS | | | | |

When the DCI indicates that the first slot offset information is the third value in the slot offset information set, the aperiodic SRS resource is transmitted in the slot n+8, as shown in Table 5.

Table 5

| D | D | U | D | U | D | U | D | U | D | D |
|---|---|---|---|---|---|---|---|---|---|---|
| slot n | slot n+1 | slot n+2 | slot n+3 | slot n+4 | slot n+5 | slot n+6 | slot n+7 | slot n+8 | slot n+9 | slot n+10 |
| PDCCH | | | | | | | | SRS | | |

It should be noted that, in the foregoing examples, D denotes a downlink slot, U denotes an uplink slot, and for an aperiodic SRS resource, the uplink slot is a valid slot.

In embodiments of this application, a terminal receives first slot offset information, where the first slot offset information is used for indicating a first slot offset of a target aperiodic RS resource; and transmits or receives the target aperiodic RS resource at a first slot position, where the first slot position is determined by any of the following: the first slot offset, and the first slot offset and a second slot offset; and the second slot offset is a slot offset configured for the target aperiodic RS resource. In the solution, the solution of determining a first slot position through a first slot offset or determining a first slot position through a first slot offset and a second slot offset increases the selectability and flexibility of determining a slot position for the terminal to transmit or receive an aperiodic RS resource, so that the problem that a manner of determining a slot position for the terminal to transmit or receive an aperiodic RS resource is not flexible enough in the related technology can be solved. In addition, the solution increases the selectability and flexibility of delivering a slot position of DCI for activating the aperiodic RS resource, that is, increases the selectability and flexibility of a slot position for transmitting a PDCCH, and can resolve to a certain extent the problem of congestion of PDCCH resources caused by delivery of a plurality of pieces of DCI in the same slot in the related technology.

It should be noted that the aperiodic RS transmission method provided in embodiments of this application may be performed by an aperiodic RS transmission apparatus, or a control module configured to perform the aperiodic RS transmission method in the aperiodic RS transmission apparatus. In embodiments of this application, an example in which the aperiodic RS transmission apparatus performs the aperiodic RS transmission method is used to describe the aperiodic RS transmission apparatus provided in embodiments of this application.

FIG. 3 is a possible schematic diagram of a structure of an aperiodic RS transmission apparatus according to an embodiment of this application. As shown in FIG. 3, an aperiodic RS transmission apparatus 300 may include: a receiving module 301, configured to receive first slot offset information, where the first slot offset information is used for indicating a first slot offset of a target aperiodic RS resource; and a transceiver module 302, configured to transmit or receive the target aperiodic RS resource at a first slot position, where the first slot position is determined by any of the following: the first slot offset, and the first slot offset and a second slot offset; and the second slot offset is a slot offset configured for the target aperiodic RS resource.

Optionally, the receiving module 301 is specifically configured to receive target information, where the target information includes a slot offset indication field, and the slot offset indication field carries the first slot offset information; and the target information is at least one of the following: RRC signaling, DCI, and first media access control control element MAC CE signaling.

Optionally, in a case that the target information is the DCI or the first MAC CE signaling, the first slot offset information is one piece of slot offset information in a slot offset information set, and the slot offset information set is configured for a terminal through the RRC signaling or second MAC CE signaling.

Optionally, in a case that the slot offset information set is empty, the slot offset indication field has 0 bits.

Optionally, the slot offset indication field includes at least one of the following: a first indication field and a second indication field, where the first indication field is used for carrying first offset information, and the first offset information is used for indicating a first slot offset of an aperiodic sounding reference signal SRS resource; and the second indication field is used for carrying second offset information, and the second offset information is used for indicating a first slot offset of an aperiodic channel state information reference signal CSI-RS.

Optionally, the receiving module 301 is configured to: before the target aperiodic RS resource is transmitted or received at the first slot position, receive target request information, where the target request information includes a target activation indication field, and the target activation indication field is used for indicating whether to activate the target aperiodic RS resource; and in a case that the target activation indication field does not exist or the target activation indication field indicates not to activate the target aperiodic RS resource, the slot offset indication field has 0 bits.

Optionally, the target aperiodic RS resource includes at least one of the following: a target aperiodic SRS resource and a target aperiodic CSI-RS resource.

Optionally, in a case that the target aperiodic RS resource includes the target aperiodic SRS resource, the target aperiodic SRS resource is at least one aperiodic SRS resource in an aperiodic SRS resource set; and in a case that the target aperiodic RS resource includes the target aperiodic CSI-RS resource, the target aperiodic CSI-RS resource is at least one aperiodic CSI-RS resource associated with an aperiodic CSI report.

Optionally, the receiving module 301 is configured to: before the target aperiodic RS resource is transmitted or received at the first slot position, receive first request information, where the first request information includes a first activation indication field, and the first activation indication field is used for indicating whether to activate the target aperiodic SRS resource; in a case that the first activation indication field indicates to activate the target aperiodic SRS resource, the first slot offset information is used for indicating a first slot offset of the target aperiodic SRS resource; and the target aperiodic RS resource is the target aperiodic SRS resource.

Optionally, the receiving module 301 is configured to: before the target aperiodic RS resource is transmitted or received at the first slot position, receive second request information, where the second request information includes a second activation indication field, and the second activation indication field is used for indicating whether to activate the target aperiodic CSI-RS resource; in a case that the second activation indication field indicates to activate the target aperiodic CSI-RS resource, the first slot offset information is used for indicating a first slot offset of the target aperiodic CSI-RS resource; and the target aperiodic RS resource is the target aperiodic CSI-RS resource.

Optionally, the first slot offset information includes offsetting N target slots, any target slot is any one of the following: an uplink slot, a downlink slot, a special slot, a valid slot, an enable slot, and a random slot, and N is a natural number.

Optionally, in a case that the first slot offset information is not configured, N is a default value.

Optionally, the valid slot is a slot resource usable for transmitting the target aperiodic RS resource.

Optionally, the first slot position satisfies at least one of the following: that the first slot position is located in a valid window; that a time interval between the first slot position and second slot position is longer than or equal to a first time interval; and that a time interval between aperiodic RS resources in the target aperiodic RS resource is longer than or equal to a minimum time interval of antenna switching, where the second slot position is a slot position at which DCI for activating the target aperiodic RS resource is received, and the first time interval is a minimum time interval between DCI for activating an aperiodic RS resource and the aperiodic RS resource.

Optionally, the valid window is determined by at least one of the following: configured by the network-side device, specified in a protocol, and reported by a terminal.

Optionally, a slot template of the valid window is determined by at least one of the following: configured by the network-side device, specified in a protocol, and reported by a terminal, where the slot template includes a starting point of the valid window, a window length of the valid window, and a position distribution of enable slots in the valid window.

Optionally, the starting point of the valid window is located in the second slot position or a third slot position. The third slot position is a slot position determined after the second slot position is offset by the second slot offset.

In embodiments of this application, a terminal receives first slot offset information, where the first slot offset information is used for indicating a first slot offset of a target aperiodic RS resource; and transmits or receives the target aperiodic RS resource at a first slot position, where the first slot position is determined by any of the following: the first slot offset, and the first slot offset and a second slot offset; and the second slot offset is a slot offset configured for the target aperiodic RS resource. In the solution, the solution of determining a first slot position through a first slot offset or determining a first slot position through a first slot offset and a second slot offset increases the selectability and flexibility of determining a slot position for the terminal to transmit or receive an aperiodic RS resource, so that the problem that a manner of determining a slot position for the terminal to transmit or receive an aperiodic RS resource is not flexible enough in the related technology can be solved. In addition, the solution increases the selectability and flexibility of delivering a slot position of DCI for activating the aperiodic RS resource, that is, increases the selectability and flexibility of a slot position for transmitting a PDCCH, and can resolve to a certain extent the problem of congestion of PDCCH resources caused by delivery of a plurality of pieces of DCI in the same slot in the related technology.

The aperiodic RS transmission apparatus in embodiments of this application may be an apparatus or may be a part, an integrated circuit or a chip in a terminal. The apparatus may be a mobile terminal or may be a non-mobile terminal. For example, the mobile terminal may include, but is not limited to, the type of the terminal 11 listed above. The non-mobile terminal may be a server, a Network Attached Storage (Network Attached Storage, NAS), a personal computer (personal computer, PC), a television (television, TV), a teller machine, a kiosk, or the like. This is not specifically limited in embodiments of this application.

The aperiodic RS transmission apparatus in embodiments of this application may be an apparatus with an operating system. The operating system may be an Android (Android) operating system, may be an iOS operating system, or may be another possible operating system. This is not specifically limited in embodiments of this application.

The aperiodic RS transmission apparatus provided in embodiments of this application can implement each process implemented in the method embodiments in FIG. 2, and the same technical effect can be achieved. To avoid repetition, details are not described herein again.

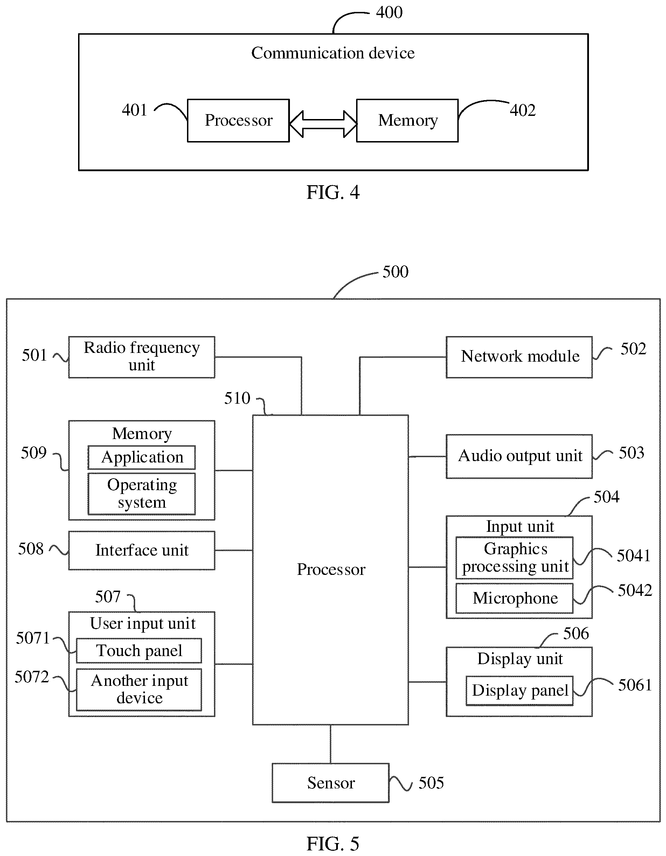

Optionally, as shown in FIG. 4, embodiments of this application further provide a communication device 400, including a processor 401, a memory 402, and a program or instructions stored in the memory 402 and executable on the processor 401. For example, when the communication device 400 is a terminal, when the program or instructions are executed by the processor 401, each process in embodiments of the foregoing aperiodic RS transmission method is implemented, and the same technical effect can be achieved. When the communication device 400 is a network-side device, when the program or instructions are executed by the processor 401, each process in embodiments of the foregoing aperiodic RS transmission method is implemented, and the same technical effect can be achieved. To avoid repetition, details are not described herein again.

FIG. 5 is a schematic diagram of a hardware structure of a terminal according to an embodiment of this application.

A terminal 500 includes, but is not limited to, components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (such as a battery) for supplying power to the components. The power supply may be logically connected to the processor 510 by a power management system, thereby implementing functions such as charging discharging, and power consumption management by using the power management system. A person skilled in the art may understand that the terminal structure shown in FIG. 5 does not constitute a limitation on the terminal, and the terminal may include more or fewer components than shown, or combine some components, or have different component arrangements. Details are not described herein again.

It should be understood that in embodiments of this application, the input unit 504 may include a graphics processing unit (Graphics Processing Unit, GPU) 5041 and a microphone 5042. The graphics processing unit 5041 performs processing on image data of a static picture or a video that is obtained by an image acquisition device (for example, a camera) in a video acquisition mode or an image acquisition mode. The display unit 506 may include a display panel 5061. The display panel 5061 may be configured in the form of a liquid crystal display, an organic light-emitting diode, or the like. The user input unit 507 includes a touch panel 5071 and another input device 5072. The touch panel 5071 may be referred to as a touch screen. The touch panel 5071 may include two parts: a touch detection apparatus and a touch controller. The another input device 5072 may include, but not limited to, a physical keyboard, a functional key (such as a volume control key or a switch key), a track ball, a mouse, and a joystick, which are not described herein in detail.

In embodiments of this application, the radio frequency unit 501 receives downlink data from a network-side device, and then delivers the downlink data to the processor 510 for processing; and in addition, sends uplink data to the network-side device. Generally, the radio frequency unit 501 includes, but is not limited to, an antenna, at least one amplifier, a transceiver, a coupler, a low noise amplifier, a duplexer, and the like.

The memory 509 may be configured to store a software program or instructions and various data. The memory 509 may mainly include a program storage or instruction area and a data storage area. The program storage or instruction area may store an operating system, an application or instructions required by at least one function (for example, a sound playback function and an image display function), and the like. In addition, the memory 509 may include a high speed random access memory, and may further include a non-volatile memory. The non-volatile memory may be a read-only memory, ROM), a programmable ROM, PROM), an erasable programmable read-only memory, EPROM), an electrically EPROM, EEPROM), or a flash memory, and is, for example, at least one magnetic disk storage device, a flash memory or another non-volatile solid-state storage device.

The processor 510 may include one or more processing units. Optionally, the processor 510 may integrate an application processor and a modem processor. The application processor mainly processes an operating system, a user interface, an application, instructions, or the like. The modem processor mainly processes wireless communication, and is, for example, a baseband processor. It may be understood that the modem processor may alternatively not be integrated in the processor 510.

The radio frequency unit 501 is configured to receive first slot offset information, where the first slot offset information is used for indicating a first slot offset of a target aperiodic RS resource; and is configured to transmit or receive the target aperiodic RS resource at a first slot position, where the first slot position is determined by any of the following: the first slot offset, and the first slot offset and a second slot offset; and the second slot offset is a slot offset configured for the target aperiodic RS resource.

Optionally, the radio frequency unit 501 is specifically configured to receive target information, where the target information includes a slot offset indication field, and the slot offset indication field carries the first slot offset information; and the target information is at least one of the following: RRC signaling, DCI, and first media access control control element MAC CE signaling.

Optionally, in a case that the target information is the DCI or the first MAC CE signaling, the first slot offset information is one piece of slot offset information in a slot offset information set, and the slot offset information set is configured for the terminal through the RRC signaling or second MAC CE signaling.

Optionally, in a case that the slot offset information set is empty, the slot offset indication field has 0 bits.

Optionally, the slot offset indication field includes at least one of the following: a first indication field and a second indication field, where the first indication field is used for carrying first offset information, and the first offset information is used for indicating a first slot offset of an aperiodic sounding reference signal SRS resource; and the second indication field is used for carrying second offset information, and the second offset information is used for indicating a first slot offset of an aperiodic channel state information reference signal CSI-RS.

Optionally, the radio frequency unit 501 is configured to: before the target aperiodic RS resource is transmitted or received at the first slot position, receive target request information, where the target request information includes a target activation indication field, and the target activation indication field is used for indicating whether to activate the target aperiodic RS resource; and in a case that the target activation indication field does not exist or the target activation indication field indicates not to activate the target aperiodic RS resource, the slot offset indication field has 0 bits.

Optionally, the target aperiodic RS resource includes at least one of the following: a target aperiodic SRS resource and a target aperiodic CSI-RS resource.

Optionally, in a case that the target aperiodic RS resource includes the target aperiodic SRS resource, the target aperiodic SRS resource is at least one aperiodic SRS resource in an aperiodic SRS resource set; and in a case that the target aperiodic RS resource includes the target aperiodic CSI-RS resource, the target aperiodic CSI-RS resource is at least one aperiodic CSI-RS resource associated with an aperiodic CSI report.

Optionally, the radio frequency unit 501 is configured to: before the target aperiodic RS resource is transmitted or received at the first slot position, receive first request information, where the first request information includes a first activation indication field, and the first activation indication field is used for indicating whether to activate the target aperiodic SRS resource; in a case that the first activation indication field indicates to activate the target aperiodic SRS resource, the first slot offset information is used for indicating a first slot offset of the target aperiodic SRS resource; and the target aperiodic RS resource is the target aperiodic SRS resource.

Optionally, the radio frequency unit 501 is configured to: before the target aperiodic RS resource is transmitted or received at the first slot position, receive second request information, where the second request information includes a second activation indication field, and the second activation indication field is used for indicating whether to activate the target aperiodic CSI-RS resource; in a case that the second activation indication field indicates to activate the target aperiodic CSI-RS resource, the first slot offset information is used for indicating a first slot offset of the target aperiodic CSI-RS resource; and the target aperiodic RS resource is the target aperiodic CSI-RS resource.

Optionally, the first slot offset information includes offsetting N target slots, any target slot is any one of the following: an uplink slot, a downlink slot, a special slot, a valid slot, an enable slot, and a random slot, and N is a natural number.

Optionally, in a case that the first slot offset information is not configured, N is a default value.

Optionally, the valid slot is a slot resource usable for transmitting the target aperiodic RS resource.

Optionally, the first slot position satisfies at least one of the following: that the first slot position is located in a valid window; that a time interval between the first slot position and second slot position is longer than or equal to a first time interval; and that a time interval between aperiodic RS resources in the target aperiodic RS resource is longer than or equal to a minimum time interval of antenna switching, where the second slot position is a slot position at which DCI for activating the target aperiodic RS resource is received, and the first time interval is a minimum time interval between DCI for activating an aperiodic RS resource and the aperiodic RS resource.

Optionally, the valid window is determined by at least one of the following: configured by the network-side device, specified in a protocol, and reported by a terminal.

Optionally, a slot template of the valid window is determined by at least one of the following: configured by the network-side device, specified in a protocol, and reported by a terminal, where the slot template includes a starting point of the valid window, a window length of the valid window, and a position distribution of enable slots in the valid window.

Optionally, the starting point of the valid window is located in the second slot position or a third slot position. The third slot position is a slot position determined after the second slot position is offset by the second slot offset.

In embodiments of this application, a terminal receives first slot offset information, where the first slot offset information is used for indicating a first slot offset of a target aperiodic RS resource; and transmits or receives the target aperiodic RS resource at a first slot position, where the first slot position is determined by any of the following: the first slot offset, and the first slot offset and a second slot offset; and the second slot offset is a slot offset configured for the target aperiodic RS resource. In the solution, the solution of determining a first slot position through a first slot offset or determining a first slot position through a first slot offset and a second slot offset increases the selectability and flexibility of determining a slot position for the terminal to transmit or receive an aperiodic RS resource, so that the problem that a manner of determining a slot position for the terminal to transmit or receive an aperiodic RS resource is not flexible enough in the related technology can be solved. In addition, the solution increases the selectability and flexibility of delivering a slot position of DCI for activating the aperiodic RS resource, that is, increases the selectability and flexibility of a slot position for transmitting a PDCCH, and can resolve to a certain extent the problem of congestion of PDCCH resources caused by delivery of a plurality of pieces of DCI in the same slot in the related technology.

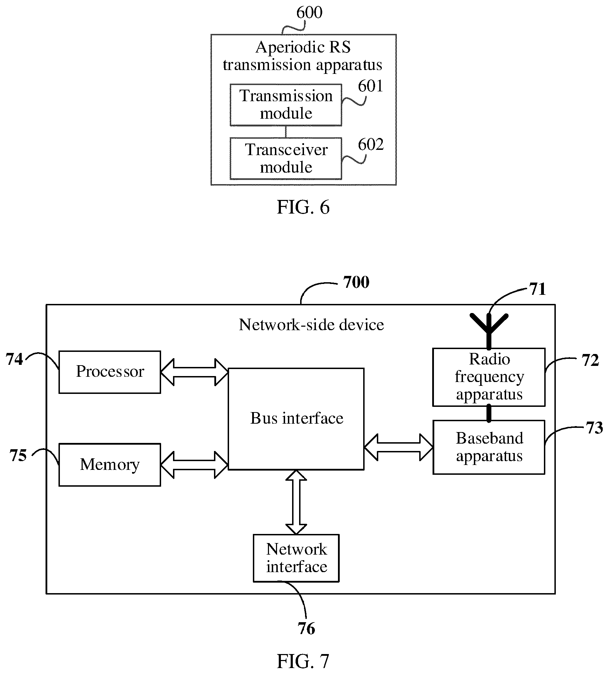

FIG. 6 is a possible schematic diagram of a structure of an aperiodic RS transmission apparatus according to an embodiment of this application. As shown in FIG. 6, an aperiodic RS transmission apparatus 600 may include: a transmission module 601, configured to transmit first slot offset information, where the first slot offset information is used for indicating a first slot offset of a target aperiodic RS resource; and a transceiver module 602, configured to transmit or receive the target aperiodic RS resource at a first slot position, where the first slot position is determined by any of the following: the first slot offset, and the first slot offset and a second slot offset; and the second slot offset is a slot offset configured for the target aperiodic RS resource.

Optionally, the transmission module 601 is specifically configured to transmit target information, where the target information includes a slot offset indication field, and the slot offset indication field carries the first slot offset information; and the target information is at least one of the following: RRC signaling, DCI, and first media access control control element MAC CE signaling.

Optionally, in a case that the target information is the DCI or the first MAC CE signaling, the first slot offset information is one piece of slot offset information in a slot offset information set, and the slot offset information set is configured for a terminal through the RRC signaling or second MAC CE signaling.

Optionally, in a case that the slot offset information set is empty, the slot offset indication field has 0 bits.

Optionally, the slot offset indication field includes at least one of the following: a first indication field and a second indication field,

where the first indication field is used for carrying first offset information, and the first offset information is used for indicating a first slot offset of an aperiodic sounding reference signal SRS resource; and the second indication field is used for carrying second offset information, and the second offset information is used for indicating a first slot offset of an aperiodic channel state information reference signal CSI-RS.

Optionally, the transmission module 601 is configured to: before the target aperiodic RS resource is transmitted or received at the first slot position, transmit target request information, where the target request information includes a target activation indication field, and the target activation indication field is used for indicating whether to activate the target aperiodic RS resource; and in a case that the target activation indication field does not exist or the target activation indication field indicates not to activate the target aperiodic RS resource, the slot offset indication field has 0 bits.

Optionally, the target aperiodic RS resource includes at least one of the following: a target aperiodic SRS resource and a target aperiodic CSI-RS resource.

Optionally, in a case that the target aperiodic RS resource includes the target aperiodic SRS resource, the target aperiodic SRS resource is at least one aperiodic SRS resource in an aperiodic SRS resource set; and in a case that the target aperiodic RS resource includes the target aperiodic CSI-RS resource, the target aperiodic CSI-RS resource is at least one aperiodic CSI-RS resource associated with an aperiodic CSI report.

Optionally, the transceiver module 602 is configured to: before the target aperiodic RS resource is transmitted or received at the first slot position, receive first request information, where the first request information includes a first activation indication field, and the first activation indication field is used for indicating whether to activate the target aperiodic SRS resource; in a case that the first activation indication field indicates to activate the target aperiodic SRS resource, the first slot offset information is used for indicating a first slot offset of the target aperiodic SRS resource; and the target aperiodic RS resource is the target aperiodic SRS resource.

Optionally, the transmission module 601 is configured to: before the target aperiodic RS resource is transmitted or received at the first slot position, transmit second request information, where the second request information includes a second activation indication field, and the second activation indication field is used for indicating whether to activate the target aperiodic CSI-RS resource; in a case that the second activation indication field indicates to activate the target aperiodic CSI-RS resource, the first slot offset information is used for indicating a first slot offset of the target aperiodic CSI-RS resource; and the target aperiodic RS resource is the target aperiodic CSI-RS resource.

Optionally, the first slot offset information includes offsetting N target slots, any target slot is any one of the following: an uplink slot, a downlink slot, a special slot, a valid slot, an enable slot, and a random slot, and N is a natural number.

Optionally, in a case that the first slot offset information is not configured, N is a default value.

Optionally, the valid slot is a slot resource usable for transmitting the target aperiodic RS resource.

Optionally, the first slot position satisfies at least one of the following: that the first slot position is located in a valid window; that a time interval between the first slot position and second slot position is longer than or equal to a first time interval; and that a time interval between aperiodic RS resources in the target aperiodic RS resource is longer than or equal to a minimum time interval of antenna switching, where the second slot position is a slot position at which DCI for activating the target aperiodic RS resource is received, and the first time interval is a minimum time interval between DCI for activating an aperiodic RS resource and the aperiodic RS resource.

Optionally, the valid window is determined by at least one of the following: configured by the network-side device, specified in a protocol, and reported by a terminal.

Optionally, a slot template of the valid window is determined by at least one of the following: configured by the network-side device, specified in a protocol, and reported by a terminal, where the slot template includes a starting point of the valid window, a window length of the valid window, and a position distribution of enable slots in the valid window.

Optionally, the starting point of the valid window is located in the second slot position or a third slot position. The third slot position is a slot position determined after the second slot position is offset by the second slot offset.

In embodiments of this application, the network-side device transmits first slot offset information, where the first slot offset information is used for indicating a first slot offset of a target aperiodic RS resource; and transmits or receives the target aperiodic RS resource at a first slot position, where the first slot position is determined by any of the following: the first slot offset, and the first slot offset and a second slot offset; and the second slot offset is a slot offset configured for the target aperiodic RS resource. In the solution, the solution of determining a first slot position through a first slot offset or determining a first slot position through a first slot offset and a second slot offset increases the selectability and flexibility of determining a slot position for the terminal to transmit or receive an aperiodic RS resource, so that the problem that a manner of determining a slot position for the terminal to transmit or receive an aperiodic RS resource is not flexible enough in the related technology can be solved. In addition, the solution increases the selectability and flexibility of delivering a slot position of DCI for activating the aperiodic RS resource, that is, increases the selectability and flexibility of a slot position for transmitting a PDCCH, and can resolve to a certain extent the problem of congestion of PDCCH resources caused by delivery of a plurality of pieces of DCI in the same slot in the related technology.

Specifically, embodiments of this application further provide a network-side device. As shown in FIG. 7, a network-side device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes information to be sent, and sends the information to the radio frequency apparatus 72. The radio frequency apparatus 72 processes the received information and sends the information by using the antenna 71.

A band processing apparatus may be located in the baseband apparatus 73. The method performed by the network-side device in the foregoing embodiments may be implemented in the baseband apparatus 73. The baseband apparatus 73 includes a processor 74 and a memory 75.

The baseband apparatus 73 may include, for example, at least one baseband plate. A plurality of chips are disposed on the baseband plate. As shown in FIG. 7, one of the plurality of chips is, for example, the processor 74, and is connected to the memory 75, to invoke a program in the memory 75 to perform operations of the network-side device in the foregoing method embodiment.

The baseband apparatus 73 may further include a network interface 76, configured to exchange information with the radio frequency apparatus 72. The interface is, for example, a common public radio interface (common public radio interface, CPRI).

Specifically, the network-side device in embodiments of this application further include: instructions or a program stored in the memory 75 and executable on the processor 74. The processor 74 invokes the instructions or program in the memory 75 to perform the method performed by the module shown in FIG. 6 and achieves the same technical effect. To avoid repetition, details are not described herein again.

Embodiments of this application further provide a readable storage medium. The readable storage medium stores a program or instructions. When the program or instructions are executed by a processor, each process of the foregoing embodiments of the aperiodic RS transmission method is implemented, and the same technical effect can be achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, an optical disc, or the like.

Embodiments of this application further provide a chip. The chip includes a processor and a communication interface. The communication interface is coupled to the processor are. The processor is configured to execute a program or instructions of a network-side device to implement various processes in embodiments of the aperiodic RS transmission method, and can achieve the same technical effect. To avoid repetition, details are described again.

It should be noted that, the chip mentioned in embodiments of this application may also be referred to as a system-level chip, a system chip, a chip system, a system on chip, or the like.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one ..." does not exclude that there are still other same elements in the processes, methods, objects, or apparatuses. Further, it needs to be noted that the scope of the methods and apparatuses in embodiments of this application is not limited to performing the functions in the order shown or discussed, but may also include performing the functions in a substantially simultaneous manner or in the reverse order depending on the functions involved. For example, the described methods may be performed in a different order than described, and various steps may also be added, omitted, or combined. In addition, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network-side device, or the like) to perform the foregoing methods described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in this application make many forms without departing from the idea of this application and the scope of protection of the claims. All of the forms fall within the protection of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in this application make many forms without departing from this application and the scope of protection of the claims.

**Claims**

1. An aperiodic reference signal, RS, transmission method, performed by a terminal (11) and comprising:

   receiving (201, 201b) first slot offset information, wherein the first slot offset information is used for indicating a first slot offset of a target aperiodic RS resource; and
   transmitting (202) the target aperiodic RS resource at a first slot position, wherein the first slot position is determined by the first slot offset and a second slot offset; and the second slot offset is a slot offset configured for the target aperiodic RS resource;
   wherein the receiving (201, 201b) first slot offset information comprises:

   receiving target information;
   wherein the target information comprises a slot offset indication field, and the slot offset indication field carries the first slot offset information; and the target information is downlink control information, DCI;
   **characterised in that**
   the first slot offset information is one piece of slot offset information in a slot offset information set, and the slot offset information set is configured for the terminal (11) through radio resource control, RRC, signaling;
   wherein in a case that the slot offset information set is empty, the slot offset indication field has 0 bits.

2. The method according to claim 1, wherein the target aperiodic RS resource comprises at least one of following: a target aperiodic sounding reference signal, SRS, resource and a target aperiodic channel state information reference signal, CSI-RS, resource;

   in a case that the target aperiodic RS resource comprises the target aperiodic SRS resource, the target aperiodic SRS resource is at least one aperiodic SRS resource in an aperiodic SRS resource set; and
   in a case that the target aperiodic RS resource comprises the target aperiodic CSI-RS resource, the target aperiodic CSI-RS resource is at least one aperiodic CSI-RS resource associated with an aperiodic CSI report.

3. The method according to claim 1, wherein the target aperiodic RS resource comprises at least one of following: a target aperiodic sounding reference signal, SRS, resource and a target aperiodic channel state information reference signal, CSI-RS, resource; and before the transmitting (202) the target aperiodic RS resource at a first slot position, the method further comprises:

   receiving first request information;
   wherein the first request information comprises a first activation indication field, and the first activation indication field is used for indicating whether to activate the target aperiodic SRS resource; and
   in a case that the first activation indication field indicates to activate the target aperiodic SRS resource, the first slot offset information is used for indicating a first slot offset of the target aperiodic SRS resource; and the target aperiodic RS resource is the target aperiodic SRS resource;

or

receiving second request information;

wherein the second request information comprises a second activation indication field, and the second activation indication field is used for indicating whether to activate the target aperiodic CSI-RS resource; and

in a case that the second activation indication field indicates to activate the target aperiodic CSI-RS resource, the first slot offset information is used for indicating a first slot offset of the target aperiodic CSI-RS resource; and the target aperiodic RS resource is the target aperiodic CSI-RS resource.

4. The method according to claim 1, wherein the first slot offset information comprises offsetting N target slots, any target slot is any one of following: an uplink slot, a downlink slot, a special slot, a valid slot, an enable slot, and a random slot, and N is a natural number.

5. The method according to claim 4, wherein in a case that the first slot offset information is not configured, N is a default value.

6. The method according to claim 4, wherein the valid slot is a slot resource usable for the target aperiodic RS resource.

7. The method according to claim 1, wherein the first slot position satisfies at least one of following:

that the first slot position is located in a valid window;

that a time interval between the first slot position and second slot position is longer than or equal to a first time interval; and

that a time interval between aperiodic RS resources in the target aperiodic RS resource is longer than or equal to a minimum time interval of antenna switching;

wherein the second slot position is a slot position at which downlink control information, DCI, for activating the target aperiodic RS resource is received, and the first time interval is a minimum time interval between DCI for activating an aperiodic RS resource and the aperiodic RS resource.

8. The method according to claim 7, wherein a slot template of the valid window is determined by at least one of following: configured by a network-side device, specified in a protocol, and reported by the terminal;

wherein the slot template comprises a starting point of the valid window, a window length of the valid window, and a position distribution of enable slots in the valid window.

9. The method according to claim 8, wherein the starting point of the valid window is located in the second slot position or a third slot position;

wherein the third slot position is a slot position determined after the second slot position is offset by the second slot offset.

10. The method according to claim 1, wherein the slot offset indication field comprises at least one of following: a first indication field and a second indication field;

wherein the first indication field is used for carrying first offset information, and the first offset information is used for indicating a first slot offset of an aperiodic sounding reference signal SRS resource; and the second indication field is used for carrying second offset information, and the second offset information is used for indicating a first slot offset of an aperiodic channel state information reference signal, CSI-RS.

11. The method according to claim 1, wherein before the transmitting the target aperiodic RS resource at a first slot position, the method further comprises:

receiving target request information;

wherein the target request information comprises a target activation indication field, and the target activation indication field is used for indicating whether to activate the target aperiodic RS resource; and

in a case that the target activation indication field does not exist or the target activation indication field indicates not to activate the target aperiodic RS resource, the slot offset indication field has 0 bits.

12. An aperiodic reference signal, RS, transmission method, performed by a network-side device (12) and comprising:

transmitting (201a) first slot offset information, wherein the first slot offset information is used for indicating a first slot offset of a target aperiodic RS resource; and

receiving (203) the target aperiodic RS resource at a first slot position, wherein the first slot position is determined by the first slot offset and a second slot offset; and the second slot offset is a slot offset configured for the target aperiodic RS resource;

wherein the transmitting (201a) first slot offset information comprises:

transmitting target information;

wherein the target information comprises a slot offset indication field, and the slot offset indication field carries the first slot offset information; and the target information is downlink control information, DCI;

**characterised in that**

the first slot offset information is one piece of slot offset information in a slot offset information set, and the slot offset information set is configured for a terminal (11) through radio resource control, RRC, signaling;

wherein in a case that the slot offset information set is empty, the slot offset indication field has 0 bits.

13. The method according to claim 12, wherein the first slot offset information comprises offsetting N target slots, any target slot is any one of following: an uplink slot, a downlink slot, a special slot, a valid slot, an enable slot, and a random slot, and N is a natural number;

wherein in a case that the first slot offset information is not configured, N is a default value.

14. A terminal (500), comprising a processor (510), a memory (509), and a program or instructions stored in the memory (509) and executable on the processor (510), wherein when the program or instructions are executed by the processor (510), causes the processor to carry out the steps of the aperiodic reference signal, RS, transmission method according to any one of claims 1 to 11.

15. A network-side device (700), comprising a processor (74), a memory (75), and a program or instructions stored in the memory (75) and executable on the processor (74), wherein when the program or instructions are executed by the processor (74), causes the processor to carry out the steps of the aperiodic reference signal, RS, transmission method according to any one of claims 12 to 13.

**Patentansprüche**

1. Ein Verfahren zur Übertragung eines aperiodischen Referenzsignals, RS, das von einem Endgerät (11) durchgeführt wird und Folgendes beinhaltet:

Empfangen (201, 201b) von ersten Slot-Offset-Informationen, wobei die ersten Slot-Offset-Informationen zum Anzeigen eines ersten Slot-Offsets einer aperiodischen RS-Zielressource verwendet werden; und

Übertragen (202) der aperiodischen RS-Zielressource an einer ersten Slot-Position, wobei die erste Slot-Position durch den ersten Slot-Offset und einen zweiten Slot-Offset bestimmt wird; und der zweite Slot-Offset ein für die aperiodische RS-Zielressource konfigurierter Slot-Offset ist;

wobei das Empfangen (201, 201b) von ersten Slot-Offset-Informationen Folgendes beinhaltet:

Empfangen von Zielinformationen;

wobei die Zielinformationen ein Slot-Offset-Anzeigefeld beinhalten und das Slot-Offset-Anzeigefeld die ersten Slot-Offset-Informationen trägt; und die Zielinformationen Downlink-Steuerinformationen, DCI, sind;

**dadurch gekennzeichnet, dass**

die ersten Slot-Offset-Informationen eine Slot-Offset-Information aus einem Slot-Offset-Informationensatz sind und der Slot-Offset-Informationensatz für das Endgerät (11) durch Funkressourcensteuerungs-Signalisierung, RRC-Signalisierung, konfiguriert ist;

wobei in einem Fall, in dem der Slot-Offset-Informationensatz leer ist, das Slot-Offset-Anzeigefeld 0 Bits aufweist.

2. Verfahren gemäß Anspruch 1, wobei die aperiodische RS-Zielressource mindestens eines der Folgenden beinhaltet: eine aperiodische Sounding-Referenzsignal-Zielressource, SRS-Zielressource, und eine aperiodische Kanalzustandsinformationsreferenzsignal-Zielressource, CSI-RS-Zielressource;

in einem Fall, in dem die aperiodische RS-Zielressource die aperiodische SRS-Zielressource beinhaltet, ist die aperiodische SRS-Zielressource mindestens eine aperiodische SRS-Ressource in einem aperiodischen SRS-Ressourcensatz; und

in einem Fall, in dem die aperiodische RS-Zielressource die aperiodische CSI-RS-Zielressource beinhaltet, ist die aperiodische CSI-RS-Zielressource mindestens eine aperiodische CSI-RS-Ressource in einem aperiodischen SRS-Ressourcensatz.

3. Verfahren gemäß Anspruch 1, wobei die aperiodische RS-Zielressource mindestens eines der Folgenden beinhaltet: eine aperiodische Sounding-Referenzsignal-Zielressource, SRS-Zielressource, und eine aperiodische Kanalzustandsinformationsreferenzsignal-Zielressource, CSI-RS-Zielressource; und das Verfahren vor dem Übertragen (202) der aperiodischen RS-Zielressource an einer ersten Slot-Position ferner Folgendes beinhaltet:

Empfangen von ersten Anfrageinformationen;

wobei die ersten Anfrageinformationen ein erstes Aktivierungsanzeigefeld beinhalten und das erste Aktivierungsanzeigefeld zum Anzeigen verwendet wird, ob die aperiodische SRS-Zielressource zu aktivieren ist; und in einem Fall, in dem das erste Aktivierungsanzeigefeld angibt, die aperiodische SRS-Zielressource zu aktivieren, werden die ersten Slot-Offset-Informationen zum Anzeigen eines ersten Slot-Offsets der aperiodischen SRS-Zielressource verwendet; und die aperiodische RS-Zielressource ist die aperiodische SRS-Zielressource; oder

Empfangen von zweiten Anfrageinformationen;

wobei die zweiten Anfrageinformationen ein zweites Aktivierungsanzeigefeld beinhalten und das zweite Aktivierungsanzeigefeld zum Anzeigen verwendet wird, ob die aperiodische CSI-RS-Zielressource zu aktivieren ist; und

in einem Fall, in dem das zweite Aktivierungsanzeigefeld angibt, die aperiodische CSI-RS-Zielressource zu aktivieren, werden die ersten Slot-Offset-Informationen zum Anzeigen eines ersten Slot-Offsets der aperiodischen CSI-RS-Zielressource verwendet;

und die aperiodische RS-Zielressource ist die aperiodische CSI-RS-Zielressource.

4. Verfahren gemäß Anspruch 1, wobei die ersten Slot-Offset-Informationen das Versetzen um N Ziel-Slots beinhalten, wobei jeder Ziel-Slot einer der Folgenden ist: ein Uplink-Slot, ein Downlink-Slot, ein Spezial-Slot, ein Gültigkeits-Slot, ein Freigabe-Slot und ein Zufalls-Slot, und N eine natürliche Zahl ist.

5. Verfahren gemäß Anspruch 4, wobei in einem Fall, in dem die ersten Slot-Offset-Informationen nicht konfiguriert sind, N ein Standardwert ist.

6. Verfahren gemäß Anspruch 4, wobei der Gültigkeits-Slot eine Slot-Ressource ist, die für die aperiodische RS-Zielressource verwendbar ist.

7. Verfahren gemäß Anspruch 1, wobei die erste Slot-Position mindestens eines der Folgenden erfüllt:

dass sich die erste Slot-Position in einem gültigen Fenster befindet;

dass ein Zeitintervall zwischen der ersten Slot-Position und der zweiten Slot-Position länger als oder gleich einem ersten Zeitintervall ist; und

dass ein Zeitintervall zwischen aperiodischen RS-Ressourcen in der aperiodischen RS-Zielressource länger als oder gleich einem minimalen Zeitintervall der Antennenumschaltung ist;

wobei die zweite Slot-Position eine Slot-Position ist, an der Downlink-Steuerinformationen, DCI, zum Aktivieren der aperiodischen RS-Zielressource empfangen werden, und das erste Zeitintervall ein minimales Zeitintervall zwischen den DCI zum Aktivieren einer aperiodischen RS-Ressource und der aperiodischen RS-Ressource ist.

8. Verfahren gemäß Anspruch 7, wobei eine Slot-Vorlage des gültigen Fensters durch mindestens eines der Folgenden bestimmt wird: konfiguriert durch eine netzwerkseitige Vorrichtung, spezifiziert in einem Protokoll und gemeldet durch das Endgerät;

wobei die Slot-Vorlage einen Startpunkt des gültigen Fensters, eine Fensterlänge des gültigen Fensters und eine Positionsverteilung von Freigabe-Slots in dem gültigen Fenster beinhaltet.

9. Verfahren gemäß Anspruch 8, wobei sich der Startpunkt des gültigen Fensters in der zweiten Slot-Position oder einer dritten Slot-Position befindet;

wobei die dritte Slot-Position eine Slot-Position ist, die bestimmt wird, nachdem die zweite Slot-Position um den zweiten Slot-Offset versetzt wurde.

**10.** Verfahren gemäß Anspruch 1, wobei das Slot-Offset-Anzeigefeld mindestens eines der Folgenden beinhaltet: ein erstes Anzeigefeld und ein zweites Anzeigefeld;

wobei das erste Anzeigefeld zum Tragen erster Offset-Informationen verwendet wird und die ersten Offset-Informationen zum Anzeigen eines ersten Slot-Offsets einer aperiodischen Sounding-Referenzsignal-Ressource, SRS-Ressource, verwendet werden; und das zweite Anzeigefeld zum Tragen zweiter Offset-Informationen verwendet wird und die zweiten Offset-Informationen zum Anzeigen eines ersten Slot-Offsets eines aperiodischen Kanalzustandsinformationsreferenzsignals, CSI-RS, verwendet werden.

**11.** Verfahren gemäß Anspruch 1, wobei das Verfahren vor dem Übertragen der aperiodischen RS-Zielressource an einer ersten Slot-Position ferner Folgendes beinhaltet:

Empfangen von Zielanfrageinformationen;
wobei die Zielanfrageinformationen ein Zielaktivierungsanzeigefeld beinhalten und das Zielaktivierungsanzeigefeld zum Anzeigen verwendet wird, ob die aperiodische RS-Zielressource zu aktivieren ist; und
in einem Fall, in dem das Zielaktivierungsanzeigefeld nicht vorhanden ist oder das Zielaktivierungsanzeigefeld angibt, die aperiodische RS-Zielressource nicht zu aktivieren, weist das Slot-Offset-Anzeigefeld 0 Bits auf.

**12.** Ein Verfahren zur Übertragung eines aperiodischen Referenzsignals, RS, das von einer netzwerkseitigen Vorrichtung (12) durchgeführt wird und Folgendes beinhaltet:

Übertragen (201a) von ersten Slot-Offset-Informationen, wobei die ersten Slot-Offset-Informationen zum Anzeigen eines ersten Slot-Offsets einer aperiodischen RS-Zielressource verwendet werden; und
Empfangen (203) der aperiodischen RS-Zielressource an einer ersten Slot-Position, wobei die erste Slot-Position durch den ersten Slot-Offset und einen zweiten Slot-Offset bestimmt wird; und der zweite Slot-Offset ein für die aperiodische RS-Zielressource konfigurierter Slot-Offset ist;
wobei das Übertragen (201a) von ersten Slot-Offset-Informationen Folgendes beinhaltet:

Übertragen von Zielinformationen;
wobei die Zielinformationen ein Slot-Offset-Anzeigefeld beinhalten und das Slot-Offset-Anzeigefeld die ersten Slot-Offset-Informationen trägt; und die Zielinformationen Downlink-Steuerinformationen, DCI, sind;
**dadurch gekennzeichnet, dass**
die ersten Slot-Offset-Informationen eine Slot-Offset-Information aus einem Slot-Offset-Informationensatz sind und der Slot-Offset-Informationensatz für ein Endgerät (11) durch Funkressourcensteuerungs-Signalisierung, RRC-Signalisierung, konfiguriert ist;
wobei in einem Fall, in dem der Slot-Offset-Informationensatz leer ist, das Slot-Offset-Anzeigefeld 0 Bits aufweist.

**13.** Verfahren gemäß Anspruch 12, wobei die ersten Slot-Offset-Informationen das Versetzen von N Ziel-Slots beinhalten, wobei jeder Ziel-Slot einer der Folgenden ist: ein Uplink-Slot, ein Downlink-Slot, ein Spezial-Slot, ein Gültigkeits-Slot, ein Freigabe-Slot und ein Zufalls-Slot, und N eine natürliche Zahl ist;
wobei in einem Fall, in dem die ersten Slot-Offset-Informationen nicht konfiguriert sind, N ein Standardwert ist.

**14.** Ein Endgerät (500), das einen Prozessor (510), einen Speicher (509) und ein Programm oder Anweisungen, die in dem Speicher (509) gespeichert sind und auf dem Prozessor (510) ausführbar sind, beinhaltet, wobei, wenn das Programm oder die Anweisungen von dem Prozessor (510) ausgeführt werden, der Prozessor veranlasst wird, die Schritte des Verfahrens zur Übertragung eines aperiodischen Referenzsignals, RS, gemäß einem der Ansprüche 1 bis 11 durchzuführen.

**15.** Eine netzwerkseitige Vorrichtung (700), die einen Prozessor (74), einen Speicher (75) und ein Programm oder Anweisungen, die in dem Speicher (75) gespeichert sind und auf dem Prozessor (74) ausführbar sind, beinhaltet, wobei, wenn das Programm oder die Anweisungen von dem Prozessor (74) ausgeführt werden, der Prozessor veranlasst wird, die Schritte des Verfahrens zur Übertragung eines aperiodischen Referenzsignals, RS, gemäß einem der Ansprüche 12 bis 13 durchzuführen.

## Revendications

**1.** Un procédé de transmission de signal de référence, RS, apériodique, réalisé par un terminal (11) et comprenant :

la réception (201, 201b) de premières informations de décalage de créneau, les premières informations de décalage de créneau étant utilisées pour indiquer un premier décalage de créneau d'une ressource RS apériodique cible ; et

la transmission (202) de la ressource RS apériodique cible au niveau d'une première position de créneau, la première position de créneau étant déterminée par le premier décalage de créneau et un deuxième décalage de créneau ; et le deuxième décalage de créneau étant un décalage de créneau configuré pour la ressource RS apériodique cible ;

dans lequel la réception (201, 201b) de premières informations de décalage de créneau comprend :

la réception d'informations cibles ;

dans lequel les informations cibles comprennent un champ d'indication de décalage de créneau, et le champ d'indication de décalage de créneau porte les premières informations de décalage de créneau ; et les informations cibles sont des informations de commande de liaison descendante, DCI ;

**caractérisé en ce que**

les premières informations de décalage de créneau sont un élément d'informations de décalage de créneau dans un ensemble d'informations de décalage de créneau, et l'ensemble d'informations de décalage de créneau est configuré pour le terminal (11) par l'intermédiaire d'une signalisation de commande de ressource radio, RRC ;

dans lequel, dans un cas où l'ensemble d'informations de décalage de créneau est vide, le champ d'indication de décalage de créneau a 0 bit.

2. Le procédé selon la revendication 1, dans lequel la ressource RS apériodique cible comprend au moins l'une des ressources suivantes : une ressource de signal de référence de sondage, SRS, apériodique cible et une ressource de signal de référence d'informations d'état de canal, CSI-RS, apériodique cible ;

dans un cas où la ressource RS apériodique cible comprend la ressource SRS apériodique cible, la ressource SRS apériodique cible est au moins une ressource SRS apériodique dans un ensemble de ressources SRS apériodiques ; et

dans un cas où la ressource RS apériodique cible comprend la ressource CSI-RS apériodique cible, la ressource CSI-RS apériodique cible est au moins une ressource CSI-RS apériodique associée à un rapport CSI apériodique.

3. Le procédé selon la revendication 1, dans lequel la ressource RS apériodique cible comprend au moins l'une des ressources suivantes : une ressource de signal de référence de sondage, SRS, apériodique cible et une ressource de signal de référence d'informations d'état de canal, CSI-RS, apériodique cible ; et avant la transmission (202) de la ressource RS apériodique cible au niveau d'une première position de créneau, le procédé comprend en outre :

la réception de premières informations de demande ;

dans lequel les premières informations de demande comprennent un premier champ d'indication d'activation, et le premier champ d'indication d'activation est utilisé pour indiquer s'il convient d'activer la ressource SRS apériodique cible ; et

dans un cas où le premier champ d'indication d'activation indique qu'il convient d'activer la ressource SRS apériodique cible, les premières informations de décalage de créneau sont utilisées pour indiquer un premier décalage de créneau de la ressource SRS apériodique cible ; et la ressource RS apériodique cible est la ressource SRS apériodique cible ;

ou

la réception de deuxièmes informations de demande ;

dans lequel les deuxièmes informations de demande comprennent un deuxième champ d'indication d'activation, et le deuxième champ d'indication d'activation est utilisé pour indiquer s'il convient d'activer la ressource CSI-RS apériodique cible ; et

dans un cas où le deuxième champ d'indication d'activation indique qu'il convient d'activer la ressource CSI-RS apériodique cible, les premières informations de décalage de créneau sont utilisées pour indiquer un premier décalage de créneau de la ressource CSI-RS apériodique cible ; et la ressource RS apériodique cible est la ressource CSI-RS apériodique cible.

4. Le procédé selon la revendication 1, dans lequel les premières informations de décalage de créneau comprennent le décalage de N créneaux cibles, tout créneau cible est l'un quelconque des créneaux suivants : un créneau de liaison montante, un créneau de liaison descendante, un créneau spécial, un créneau valide, un créneau de mise en service et un créneau aléatoire, et N est un nombre naturel.

5. Le procédé selon la revendication 4, dans lequel, dans un cas où les premières informations de décalage de créneau ne sont pas configurées, N est une valeur par défaut.

6. Le procédé selon la revendication 4, dans lequel le créneau valide est une ressource de créneau utilisable pour la ressource RS apériodique cible.

7. Le procédé selon la revendication 1, dans lequel la première position de créneau remplit au moins l'une des conditions suivantes :

la première position de créneau est située dans une fenêtre valide ;
un intervalle de temps entre la première position de créneau et la deuxième position de créneau est supérieur ou égal à un premier intervalle de temps ; et
un intervalle de temps entre des ressources RS apériodiques dans la ressource RS apériodique cible est supérieur ou égal à un intervalle de temps minimum de commutation d'antenne ;
dans lequel la deuxième position de créneau est une position de créneau au niveau de laquelle des informations de commande de liaison descendante, DCI, pour activer la ressource RS apériodique cible sont reçues, et le premier intervalle de temps est un intervalle de temps minimum entre des DCI pour activer une ressource RS apériodique et la ressource RS apériodique.

8. Le procédé selon la revendication 7, dans lequel un modèle de créneau de la fenêtre valide est déterminé par au moins l'un d'entre ce qui suit : configuré par un dispositif côté réseau, spécifié dans un protocole, et rapporté par le terminal ; dans lequel le modèle de créneau comprend un point de départ de la fenêtre valide, une longueur de fenêtre de la fenêtre valide, et une distribution de position de créneaux de mise en service dans la fenêtre valide.

9. Le procédé selon la revendication 8, dans lequel le point de départ de la fenêtre valide est situé dans la deuxième position de créneau ou une troisième position de créneau ; dans lequel la troisième position de créneau est une position de créneau déterminée après que la deuxième position de créneau a été décalée du deuxième décalage de créneau.

10. Le procédé selon la revendication 1, dans lequel le champ d'indication de décalage de créneau comprend au moins l'un des champs suivants : un premier champ d'indication et un deuxième champ d'indication ;
dans lequel le premier champ d'indication est utilisé pour porter des premières informations de décalage, et les premières informations de décalage sont utilisées pour indiquer un premier décalage de créneau d'une ressource de signal de référence de sondage, SRS, apériodique ; et le deuxième champ d'indication est utilisé pour porter des deuxièmes informations de décalage, et les deuxièmes informations de décalage sont utilisées pour indiquer un premier décalage de créneau d'un signal de référence d'informations d'état de canal, CSI-RS, apériodique.

11. Le procédé selon la revendication 1, avant la transmission de la ressource RS apériodique cible au niveau d'une première position de créneau, le procédé comprenant en outre :

la réception d'informations de demande cibles ;
dans lequel les informations de demande cibles comprennent un champ d'indication d'activation cible, et le champ d'indication d'activation cible est utilisé pour indiquer s'il convient d'activer la ressource RS apériodique cible ; et
dans un cas où le champ d'indication d'activation cible n'existe pas ou bien où le champ d'indication d'activation cible indique qu'il convient de ne pas activer la ressource RS apériodique cible, le champ d'indication de décalage de créneau a 0 bit.

12. Un procédé de transmission de signal de référence, RS, apériodique, réalisé par un dispositif côté réseau (12) et comprenant :

la transmission (201a) de premières informations de décalage de créneau, les premières informations de décalage de créneau étant utilisées pour indiquer un premier décalage de créneau d'une ressource RS apériodique cible ; et
la réception (203) de la ressource RS apériodique cible au niveau d'une première position de créneau, la première position de créneau étant déterminée par le premier décalage de créneau et un deuxième décalage de créneau ;

# EP 4 221 297 B1

et le deuxième décalage de créneau étant un décalage de créneau configuré pour la ressource RS apériodique cible ;

dans lequel la transmission (201 a) de premières informations de décalage de créneau comprend :

la transmission d'informations cibles ;
dans lequel les informations cibles comprennent un champ d'indication de décalage de créneau, et le champ d'indication de décalage de créneau porte les premières informations de décalage de créneau ; et les informations cibles sont des informations de commande de liaison descendante, DCI ;
**caractérisé en ce que**
les premières informations de décalage de créneau sont un élément d'informations de décalage de créneau dans un ensemble d'informations de décalage de créneau, et l'ensemble d'informations de décalage de créneau est configuré pour un terminal (11) par l'intermédiaire d'une signalisation de commande de ressource radio, RRC ;
dans lequel, dans un cas où l'ensemble d'informations de décalage de créneau est vide, le champ d'indication de décalage de créneau a 0 bit.

13. Le procédé selon la revendication 12, dans lequel les premières informations de décalage de créneau comprennent le décalage de N créneaux cibles, tout créneau cible est l'un quelconque des créneaux suivants : un créneau de liaison montante, un créneau de liaison descendante, un créneau spécial, un créneau valide, un créneau de mise en service et un créneau aléatoire, et N est un nombre naturel ;
dans lequel, dans un cas où les premières informations de décalage de créneau ne sont pas configurées, N est une valeur par défaut.

14. Un terminal (500), comprenant un processeur (510), une mémoire (509), et un programme ou des instructions stockés dans la mémoire (509) et exécutables sur le processeur (510), dans lequel lorsque le programme ou les instructions sont exécutés par le processeur (510), cela amène le processeur à mettre en œuvre les étapes du procédé de transmission de signal de référence, RS, apériodique selon l'une quelconque des revendications 1 à 11.

15. Un dispositif côté réseau (700), comprenant un processeur (74), une mémoire (75), et un programme ou des instructions stockés dans la mémoire (75) et exécutables sur le processeur (74), dans lequel lorsque le programme ou les instructions sont exécutés par le processeur (74), cela amène le processeur à mettre en œuvre les étapes du procédé de transmission de signal de référence, RS, apériodique selon l'une quelconque des revendications 12 à 13.

FIG. 1

A terminal receives first slot offset information ⟋201

The terminal transmits or receives a target aperiodic RS resource at a first slot position ⟋202

FIG. 2(a)

| Terminal | | Network-side device |
| --- | --- | --- |

201a: Transmit first slot offset information to the terminal

201b: Receive the first slot offset information from the network-side device

202: Transmit or receive a target aperiodic RS resource at a first slot position

203: The network-side device transmits or receives the target aperiodic RS resource at the first slot position

FIG. 2(b)

300

Aperiodic RS transmission apparatus

Receiving module ⟋301

Transceiver module ⟋302

FIG. 3

FIG. 4

FIG. 5

600

Aperiodic RS
transmission apparatus

Transmission
module — 601

Transceiver
module — 602

FIG. 6

700 — 71

Network-side device

74 — Processor

Radio
frequency
apparatus — 72

Bus interface

Baseband
apparatus — 73

75 — Memory

Network
interface

76

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110650001 A
- CN 111245587 A
- CN 108616345 A
- EP 3471327 A1